# EUROPÄISCHE PATENTSCHRIFT

(11) **EP 1 599 366 B1**
(45) Veröffentlichungstag und Bekanntmachung des Hinweises auf die Patenterteilung: **11.07.2007**
(21) Anmeldenummer: 03770901.1
(22) Anmeldetag: 06.10.2003
(51) Int. Cl.: B60R 21/01

(54) **VERFAHREN ZUR AUSLÖSUNG VON RÜCKHALTEMITTELN**
METHOD FOR FIRING RESTRAINING MEANS
PROCEDE POUR DECLENCHER DES MOYENS DE RETENUE

(30) Priorität: 28.01.2003 DE 10303147
(43) Veröffentlichungstag der Anmeldung: 30.11.2005
(73) Patentinhaber: ROBERT BOSCH GMBH, 70442 Stuttgart (DE)
(72) Erfinder: MOLDENHAUER, Maike, 71111 Waldenbuch (DE); LESIC, Petar, 74321 Bietigheim (DE); RANK, Thomas, 71636 Ludwigsburg (DE); THEISEN, Marc, 74354 Besigheim (DE); MACK, Frank, 70376 Stuttgart (DE); TRACHTERNA, Morten, 71701 Schwieberdingen (DE); LICH, Thomas, 71409 Schwaikheim (DE); ROELLEKE, Michael, 71229 Leonberg-Hoefingen (DE); BITZER, Rainer, 71287 Weissach (DE)
(86) Internationale Anmeldenummer: PCT/DE2003/003306
(87) Internationale Veröffentlichungsnummer: WO 2004/069604

(56) Entgegenhaltungen:
- DE-A- 10 049 905
- DE-A- 10 059 426
- DE-A- 19 610 833
- DE-A- 19 724 101
- US-B1- 6 341 252

## Beschreibung

### Stand der Technik

Die Erfindung geht aus von einem Verfahren zur Auslösung von Rückhaltemitteln nach der Gattung des unabhängigen Patentanspruchs.

Die Erfindung betrifft ebenfalls eine Vorrichtung zur Durchführung des Verfahrens zur Auslösung von Rückhaltemitteln.

Aus der Anmeldung DE 100 59 426 A1 ist es bekannt, bei einem Auslösealgorithmus die Unfallschwere mit der Insassenklassifizierung zu verknüpfen, um eine Auslöseentscheidung zu bilden. Die Unfallschwere wird nach dem jeweiligen Crashtyp bestimmt.

### Vorteile der Erfindung

Das erfindungsgemäße Verfahren zur Auslösung von Rückhaltemitteln mit den Merkmalen des unabhängigen Patentanspruchs hat demgegenüber den Vorteil, dass durch die Auswertung verschiedener Algorithmen der Sensorsignale eine optimalere Bestimmung der Auslösezeit und der einzusetzenden Rückhaltemittel ermöglicht wird. Insbesondere ist das erfindungsgemäße Verfahren derart skalierbar und modular aufgebaut, sodass beliebige Algorithmen miteinander verknüpft werden können. Damit ist das Verändern des erfindungsgemäßen Verfahrens einfach und robust, da eine Änderung des Verfahrens, beispielsweise die Hinzunahme eines Algorithmus, nicht die Folge hat, dass das ganze Verfahren geändert werden muss.

Durch die in den abhängigen Ansprüchen angegebenen Maßnahmen und Weiterbildungen sind vorteilhafte Verbesserungen des im unabhängigen Patentanspruch angegebenen Verfahrens zur Auslösung von Rückhaltemitteln möglich.

Besonders vorteilhaft ist, dass in Abhängigkeit von dem Maß, das von den einzelnen Algorithmen bestimmt wird, die Auslösezeit und welche Rückhaltemittel wie stark ausgelöst werden müssen, bestimmt wird. Damit wird eine bessere Adaptation an den Crash und die Personen, die sich im Fahrzeug befinden, erreicht.

Vorteilhafterweise wird ein Maß benutzt, das allen Algorithmen gemeinsam ist. Auf der Basis dieses Maßes kann dann jeder Algorithmus den eigenen Wert berechnen. Aus den Ergebnissen der Algorithmen kann dann die resultierende Auslösezeit berechnet werden. Dadurch, dass das Maß allen Algorithmen gemeinsam ist, können beliebige Algorithmen miteinander verknüpft werden. Der Gesamtalgorithmus wird dadurch skalierbar und modular aufbaubar. Ein solches allen Algorithmen gemeinsames Maß kann beispielsweise die Crashchwere sein. Diese kann beispielsweise durch den Geschwindigkeitsabbau, die Vorverlagerung oder die Stauchung des Fahrzeugs ausgedrückt werden. Ein anderes mögliches Maß kann die Auslösezeit selbst sein, die für das jeweilige Rückhaltemittel speziell berechnet wird. Alternativ ist es möglich, auch andere z. B. abstrakte Maße zu verwenden.

Vorteilhafterweise soll weiterhin das im Folgenden beschriebene Verfahren und Maß es ermöglichen, daß die für den Standardinsassen in Standardsitzposition optimierte Auslösezeit auf den speziellen Insassen in der aktuellen Sitzposition angepasst wird. Dabei erweist es sich als vorteilhaft, daß hier sämtliche über den jeweiligen Insassen von den Innenraumsensorsystemen zur Verfügung gestellten Informationen mitberücksichtigt werden (z. B. gegurtet, ungegurtet, Gurtauszugslänge, Alter der Person, Schwangeren-, Kindersitzerkennung, etc.).

Weiterhin ist es von Vorteil, dass das wenigstens eine Sensorsignal von Precrashsensoren stammt wie Radar-, Ultraschall- oder Videosensoren und von Crashsensoren, also insbesondere Beschleunigungssensoren, die sich im Steuergerät für die Rückhaltemittel und außerhalb des Steuergeräts beispielsweise als Upfrontsensoren, die sich am Kühler befinden oder als Seitenaufprallsensoren in den Seiten des Fahrzeugs. Bei den Seitenaufprallsensoren sind auch solche Sensoren wie Drucksensoren oder andere Verformungssensoren einsetzbar. Als Algorithmen werden hier folgende eingesetzt: ein Precrashalgorithmus, also der Algorithmus, der die Precrashsignale von Radar- und Video- und Ultraschallsensoren auswertet, ein Zentralalgorithmus, der also die Sensorsignale im zentralen Steuergerät auswertet, ein Seitenaufprallalgorithmus, der also solche Sensorsignale, die für einen Seitenaufprall relevant sind, auswertet, ein Upfrontalgorithmus, das ist der Algorithmus, der die Sensorsignale der Upfrontsensoren auswertet und ein Überrollalgorithmus, der einen Überrollvorgang auswertet, beispielsweise durch Sensorsignale von Beschleunigungs- und Drehratensensoren. Weitere Algorithmen sind hier denkbar.

Vorteilhafterweise kann die Crashschwere als skalarer Wert, als Vektor oder als Matrix vorliegen, um das gemeinsame Maß zu bestimmen. Die Crashschwere kann sich dabei auf den Crashtyp, also frontal, Offset, Seite, Heck oder Überroll, oder auf das Rückhaltemittel, also Gurtstraffer, Frontairbag, Seitenairbag beziehen.

Vorteilhafterweise ist zur Durchführung des Verfahrens eine Vorrichtung vorgesehen, also ein Steuergerät mit Prozessor und die notwendigen Sensoren sowie die Ansteuerung für die Rückhaltemittel und die Rückhaltemittel selbst. Unter den Rückhaltemitteln werden Airbags, Überrollbügel und Gurtstraffer verstanden.

### Zeichnung

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 ein Flussdiagramm des erfindungsgemäßen Verfahrens und Figur 3 ein Blockdiagramm des erfindungsgemäßen Verfahrens.

### Beschreibung

Bisher wurde zur Bestimmung der Auslöseentscheidung von Rückhaltemitteln in einem Fahrzeug entweder nur ein einziger Frontalgorithmus benutzt oder dieser individuell mit weiteren Algorithmen, z. B. zur Sensierung eines Überschlags oder eines Seitencrashs, kombiniert. Die Frontalgorithmen basieren dabei auf einem speziellen Sensor, z. B. dem zentralen Beschleunigungssensor, dem Upfront- oder dem Precrashsensor, und werden entsprechend der zugehörigen Sensorik bezeichnet. Falls nur ein Frontalgorithmus eingesetzt wird, kann die Auslösezeit direkt berechnet werden. Falls eine Kombination mit anderen Algorithmen benutzt wird, kann die Auslösezeit durch eine speziell auf diese Kombination angepasste Logik ermittelt werden. Diese Logik befindet darüber, welcher Algorithmus über Auslösung bzw. Nichtauslösung des Rückhaltemittels entscheidet. Des Weiteren beziehen sich die Auslösezeiten auf standardisierte Personen, den 50%-Mann, in einer standardisierten Sitzposition. Die Auslösezeiten definieren sich also ausschließlich aus fahrzeugbezogenen Eigenschaften und nicht aus personen- bzw. sitzpositionsbezogenen Eigenschaften.

Erfindungsgemäß wird ein Verfahren zur Auslösung von Rückhaltemitteln vorgestellt, das skalierbar und modular aufgebaut ist, sodass beliebige Algorithmen miteinander verknüpft werden können. Dazu wird ein Maß definiert, das allen Algorithmen, dem Zentral-, dem Upfront-, dem Precrash-, dem Seiten-, dem Rollover- bzw. Insassenalgorithmus gemeinsam ist und das erlaubt, aus den Teilergebnissen die resultierende Auslösezeit zu berechnen. Des Weiteren soll die für den Standardinsassen in der Standardsitzposition optimierte Auslösezeit auf den speziellen Insassen in der aktuellen Sitzposition angepasst werden. An dieser Stelle müssen sämtliche Informationen über den Insassen von der Innenraumsensorik zur Verfügung gestellt werden. Zu solchen Informationen zählen der Gurtzustand, die Gurtauszugslänge, gegebenenfalls das Alter der Person, ist die Person schwanger und gegebenenfalls ein Signal von einer Kindersitzerkennung. So sollte beispielsweise der Airbag bei einem leichten Crash bei einer kleinen Person, die weit nach vorne gelehnt ist, nicht zünden. Ziel ist es also, ein Verfahren zu entwickeln, welches es einem modularen und skalierbaren Algorithmus erlaubt, für den individuellen Insassen in seiner individuellen Sitzposition aus den sich von den Teilalgorithmen berechneten Ergebnissen die endgültige Auslösezeit zu ermitteln.

Der Kern des Verfahrens besteht darin, dass ein Maß berechnet wird, das allen Teilalgorithmen gemeinsam ist und das es ermöglicht, die sich ergebende Auslösezeit zu berechnen. Dazu wird in zwei Schritten vorgegangen. Zunächst wird dieses Maß nur auf das Fahrzeug bezogen. Es wird also ein Standardinsasse in der Standardsitzposition der Berechnung zugrundegelegt. Im zweiten Schritt werden die aktuellen Innenrauminformationen, also beispielsweise Sitzposition und Größe bzw. Gewicht, mitberücksichtigt. Am Ende stellt also dieses Verfahren ein fahrzeug- und ein insassenbezogenes Maß zur Verfügung. Der Vorteil besteht darin, dass der gesamte Algorithmus zur Steuerung der Rückhaltesysteme modular und skalierbar aufgebaut werden kann und die aktuelle Situation der zu schützenden Person mitberücksichtigt wird. Damit steht die zu schützende Person mit ihren individuellen Eigenschaften in ihrer aktuellen Situation im Zentrum der zu bestimmenden Auslöseentscheidung.

Das Maß muss von allen Algorithmen unabhängig davon, ob es sich beispielsweise um einen Front-, Seiten- oder Rolloveralgorithmus handelt, berechnet werden können und ihnen allen gemeinsam sein. Da die Crashschwere am besten als Basis zur Ermittlung der Auslösezeit dient, kann sie beispielsweise als dieses Maß benutzt werden. Die Crashschwere kann dabei durch den Geschwindigkeitsabbau, die Vorverlagerung oder die Stauchung des Fahrzeugs ausgedrückt werden. Ein anderes Maß kann die Auslösezeit selbst sein, die für das jeweilige Rückhaltemittel berechnet worden ist. Alternativ ist es möglich, auch andere abstrakte Maße zu verwenden. Die Crashschwere kann dabei entweder eine skalare Zahl, ein Vektor oder eine Matrix sein. Ein Vektor oder eine Matrix ist sie dann, wenn sie unter verschiedenen Aspekten betrachtet wird. Ein Aspekt könnte beispielsweise sein, welche Crashschwere die einzelnen Algorithmen ermittelt haben. Ein anderer Aspekt könnte sein, worauf sich die Crashschwere bezieht, z. B. auf einen Front- bzw. Seitenaufprall oder einen Überschlag. Die Crashschwere kann aber auch konkret auf ein bestimmtes Rückhaltemittel bezogen werden, beispielsweise den Seitenairbag, den Frontairbag oder den Gurtstraffer. Werden mehrere Aspekte gleichzeitig betrachtet, ergibt sich eine entsprechend mehrdimensionale Matrix. Die Crashschwere kann aber auch als eine skalare Zahl erfasst werden. Dann müssen alle Aspekte zu einem Wert zusammengefasst werden.

Des Weiteren muss zwischen der Crashschwere unterschieden werden, die sich speziell auf das Fahrzeug und nur auf einen Standardinsassen bezieht und der Crashschwere, die die fahrzeugbezogene Crashschwere dem individuellen Insassen in seiner aktuellen Situation anpasst. Diese Crashschwere wird als insassenbezogene Crashschwere bezeichnet. Hierzu müssen alle zur Verfügung stehenden Informationen aus dem Innenraum über den Insassen mit herangezogen werden. Dies kann beispielsweise die Sitzposition, das Gewicht oder die Größe des Insassen sein.

Mittels einer Auslöselogik wird aus der Crashschwerematrix die Auslöseentscheidung für die verschiedenen Rückhaltemittel bestimmt. Dadurch kann beispielsweise eine hohe Crashschwere des einen Algorithmus und eine niedrige eines anderen Algorithmus die Auslösung des einen Rückhaltemittels und die Unterdrückung eines anderen Rückhaltemittels bewirken.

Durch diese Auslöselogik können beispielsweise auch Rückhaltemittel gezündet werden, falls die Precrashsensorik ein Objekt nicht erfasst, der Precrashalgorithmus nicht aktiviert worden ist, aber der Crash durch die zentrale Beschleunigungssensorik erfasst worden ist. Falls also beispielsweise der zentralsensierende Algorithmus eine wesentlich höhere Crashschwere ermittelt als der Precrashalgorithmus, dann können trotzdem die entsprechenden Rückhaltemittel ausgelöst werden. Somit ist es möglich, eine Rückfallstrategie aufzubauen.

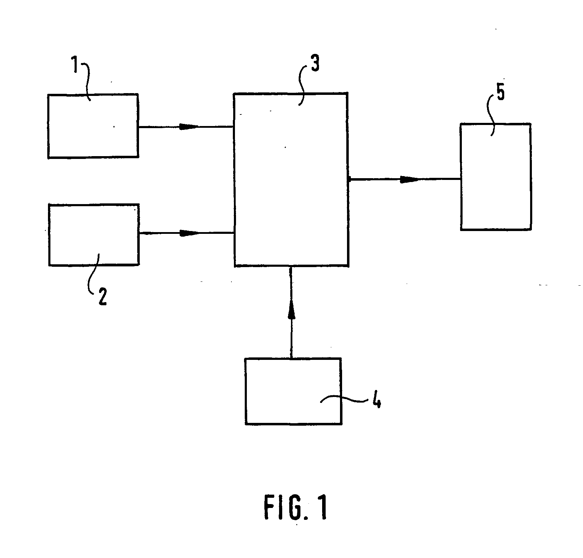

Figur 1 zeigt in einem Blockschaltbild die erfindungsgemäße Vorrichtung. Eine Crashsensorik 1 und eine Precrashsensorik 2 sind jeweils an ein Steuergerät 3 für Rückhaltemittel angeschlossen. Die Crashsensorik 1 repräsentiert hier ausgelagerte Crashsensoren wie Beschleunigungs-, Verformungs- oder indirekte Verformungssensoren wie Drucksensoren. Diese Sensoren können in den Seiten des Fahrzeugs und auch am Kühler als Upfrontsensoren vorhanden sein. Weitere Crashsensoren sind im Steuergerät 3 selbst enthalten zur Plausibilisierung oder zur Crasherkennung. Die Precrashsensorik 2 repräsentiert hier Radar- oder andere Umfeldsensoren wie Video- oder Ultraschallsensoren. Diese sind meist an der Fahrzeugfront oder am Fahrzeugheck angebracht. Über einen dritten Dateneingang ist eine Innenraumsensorik 4 an das Steuergerät 3 angeschlossen. Bei der Innenraumsensorik 4 handelt es sich vorzugsweise um gewichtsbasierte Sensoren wie Kraftmessbolzen, die am Sitz angebracht sind, oder eine Sitzmatte oder wellenbasierte Sensoriken, die beispielsweise mit Infrarot, Ultraschall oder Radar die betreffende Person auf dem Sitz untersuchen. Weitere Sensorprinzipien, die aus der Literatur bekannt sind, sind hier einsetzbar. Wichtig ist hier, die Person an sich, die über ihr Gewicht klassifiziert wird, und ihre Sitzposition zu erkennen. Im Steuergerät 3 befindet sich neben der bereits angesprochenen Crashsensorik auch eine Auswerteelektronik, die durch einen Prozessor und redundante Auswertebausteine realisiert ist. Solche redundanten Auswertebausteine wie beispielsweise ein Sicherheitshalbleiter können unabhängig von dem Prozessor die Sensorsignale auswerten und führen so eine Plausibilisierung und Redundanz zum eigentlichen Prozessor, der meist ein Mikrocontroller ist, durch. Weiterhin weist das Steuergerät 3 eine Zündkreisansteuerung für Rückhaltemittel 5 auf, um diese Rückhaltemittel 5 entsprechend anzusteuern. Das Steuergerät 3 weist weiterhin Schnittstellenbausteine zu den einzelnen Sensoren 1, 2 und 4 sowie zu den Rückhaltemitteln 5 auf. Diese Schnittstellenbausteine können Punkt-zu-Punkt-Verbindungen realisieren oder auch Busverbindungen. Dann handelt es sich bei den Schnittstellenbausteinen um Buscontroller.

Erfindungsgemäß wertet nun das Steuergerät 3 die Sensorsignale der Sensoriken 1, 2 und 4 derart aus, dass es unterschiedliche Algorithmen mit den Sensorsignalen rechnet, um dann die Werte dieser einzelnen Algorithmen zu einem Maß zu kombinieren, das dann in Abhängigkeit von einem Signal der Innenraumsensorik 4 verändert wird, um dann in Abhängigkeit von dem veränderten Maß die Rückhaltemittel 5 anzusteuern. Das Maß bestimmt dann, wann und welche Rückhaltemittel ausgelöst werden.

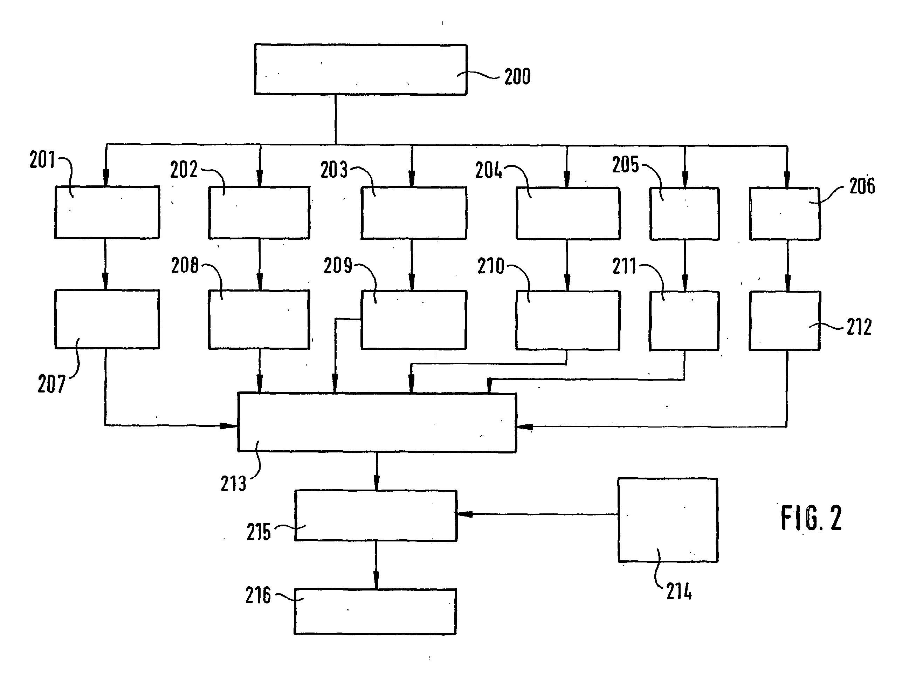

Figur 2 zeigt in einem Flussdiagramm den Ablauf des erfindungsgemäßen Verfahrens. In Verfahrensschritt 200 werden die Sensorsignale der Sensoriken 1, 2 und 4 erzeugt. Im Verfahrensschritt 201 wird mit diesen Sensorsignalen der Frontalgorithmus berechnet und liefert dann den Wert 207 in Abhängigkeit von diesem Sensorsignal. Der Wert 207 repräsentiert hier die Crashschwere wie auch die übrigen Werte der anderen Algorithmen. In Verfahrensschritt 202 wird der Upfrontalgorithmus durchgerechnet, der den Wert 208 liefert. In Verfahrensschritt 203 wird der Seitenaufprallalgorithmus durchgerechnet, der den Wert 209 liefert. In Verfahrensschritt 204 wird der Heckaufprallalgorithmus durchgerechnet, der den Wert 210 liefert. In Verfahrensschritt 205 wird der Überrollalgorithmus durchgerechnet, der den Wert 211 ausgibt und in Verfahrensschritt 206 wird der Precrashalgorithmus durchgerechnet, der den Wert 212 liefert. In Verfahrensschritt 213 werden diese Werte miteinander kombiniert, beispielsweise durch eine gewichtete Summe, um die zum Beispiel Crashschwere als das Maß zu bestimmen. Dieses Maß wird dann in Verfahrensschritt 215 in Abhängigkeit vom Signal von der Innenraumsensorik 4 verändert, um das Maß an die aktuelle Sitzposition und die Person an sich anzupassen. In Verfahrensschritt 216 wird dann in Abhängigkeit von dem so veränderten Maß eine Ansteuerung der Rückhaltemittel 5 durchgeführt. Letztlich bestimmt dann das Maß die Auslösezeit und welche Rückhaltemittel ausgelöst werden.

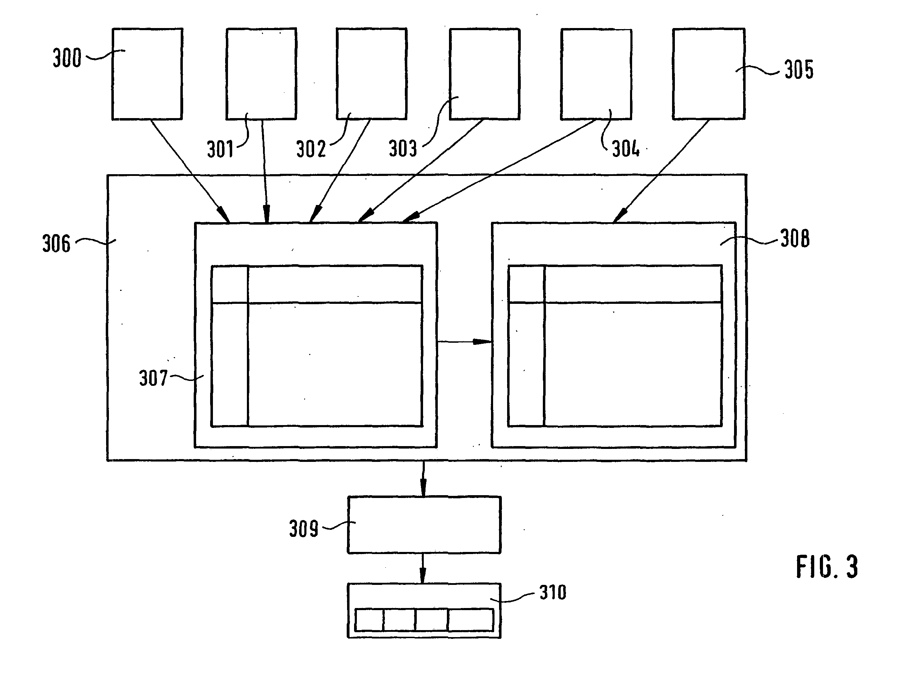

Figur 3 zeigt ein Blockdiagramm des erfindungsgemäßen Verfahrens. Ein Zentralalgorithmus 300, ein Upfrontalgorithmus 301, ein Precrashalgorithmus 302, ein Seitenaufprallalgorithmus 303 und ein Überrollalgorithmus 304 werden in Verfahrensschritt 306 mittels einer Matrix 307 zur Crashschwerebestimmung herangezogen. Diese Matrix wird dann in Verfahrensschritt 308 in Abhängigkeit vom Signal des Innenraumsensorikalgorithmus verändert. Die Crashschwere bildet damit ein Maß, das in Verfahrensschritt 309 einer Logik zugeführt wird, die in Abhängigkeit von diesem Maß in Verfahrensschritt 310 zu einer Auslöseentscheidung der jeweiligen Rückhaltemittel führt.

## Patentansprüche

1. Verfahren zur Auslösung von Rückhaltemitteln (5), **dadurch gekennzeichnet, dass** verschiedene Algorithmen (201 -206, 300 - 304) in Abhängigkeit von wenigstens einem Sensorsignal Werte (207 - 212) bestimmen, die zu einem Maß verknüpft werden und dass in Abhängigkeit von dem durch wenigstens ein Signal von einer Innenraumsensorik (4) beeinflussten Maß die Rückhaltemittel (5) ausgelöst werden.

2. Verfahren nach Anspruch 1, **dadurch gekennzeichnet, dass** in Abhängigkeit von dem Maß die Auslösezeit und die Art und Weise der Rückhaltemittel bestimmt wird.

3. Verfahren nach Anspruch 1 oder 2, **dadurch gekennzeichnet, dass** die Algorithmen (201- 206, 300-304) ein gemeinsames Maß verwenden.

4. Verfahren nach Anspruch 3, **dadurch gekennzeichnet, dass** das Maß eine Crashschwere ist.

5. Verfahren nach Anspruch 4, **dadurch gekennzeichnet, dass** die Crashschwere als abgebaute Geschwindigkeit oder als Vorverlagerung ermittelt wird.

6. Verfahren nach einem der vorhergehenden Ansprüche, **dadurch gekennzeichnet, dass** das wenigstens eine Sensorsignal von einer Precrashsensorik (2) und/oder einer Crashsensorik (1) erzeugt wird.

7. Verfahren nach einem der vorhergehenden Ansprüche, **dadurch gekennzeichnet, dass** die verschiedenen Algorithmen wenigstens zwei der folgenden Algorithmen sind:
Precrashalgorithmus (302), Frontalalgorithmus, Seitenaufprallalgoritmus (303), Upfrontalgorithmus (301) und/oder Überrollalgorothmus (304).

8. Verfahren nach Anspruch 4, **dadurch gekennzeichnet, dass** die Crashschwere skalar oder als Vektor oder als Matrix (307) verwendet wird.

9. Verfahren nach Anspruch 4 oder 8, **dadurch gekennzeichnet, dass** die Crashschwere auf den Algorithmus oder auf den Crashtyp oder auf die Rückhaltemittel bezogen wird.

10. Vorrichtung zur Durchführung des Verfahrens nach einem der Ansprüche 1 bis 9, **dadurch gekennzeichnet, dass** die Vorrichtung ein Steuergerät (3) mit Prozessor, eine Precrashsensorik (2), eine Crashsensorik (1), eine Innenraumsensorik (4), eine Zündkreisansteuerung für die Rückhaltemittel (5) und die Rückhaltemittel (5) aufweist.

## Claims

1. Method for triggering restraint means (5), **characterized in that** various algorithms (201-206, 300-304) determine, as a function of at least one sensor signal, values (207-212) which are logically combined to form a measure, and **in that** the restraint means (5) are triggered as a function of the measure which is influenced by at least one signal from a passenger compartment sensor signal (4).

2. Method according to Claim 1, **characterized in that** the triggering time and the type and method of the restraint means are determined as a function of the measure.

3. Method according to Claim 1 or 2, **characterized in that** the algorithms (201-206, 300-304) use a common measure.

4. Method according to Claim 3, **characterized in that** the measure is a degree of severity of a crash.

5. Method according to Claim 4, **characterized in that** the degree of severity of a crash is determined as a reduced velocity or as a forward displacement.

6. Method according to one of the preceding claims, **characterized in that** the at least one sensor signal is generated by a precrash sensor system (2) and/or a crash sensor system (1).

7. Method according to one of the preceding claims, **characterized in that** the various algorithms are at least two of the following algorithms: precrash algorithm (302), frontal algorithm, side impact algorithm (303), upfront algorithm (301) and/or rollover algorithm (304).

8. Method according to Claim 4, **characterized in that** the severity of a crash is used in a scalar fashion or as a vector or as a matrix (307).

9. Method according to Claim 4 or 8, **characterized in that** the severity of a crash is related to the algorithm or to the type of crash or to the restraint means.

10. Device for carrying out the method according to one of Claims 1 to 9, **characterized in that** the device has a control device (3) with a processor, a precrash sensor system (2), a crash sensor system (4), a passenger compartment sensor system (4), an ignition circuit actuation means for the restraint means (5) and the restraint means (5).

## Revendications

1. Procédé pour déclencher des moyens de retenue (5),
**caractérisé en ce que**
différents algorithmes (201 - 206, 300 - 304) définissent en fonction d'au moins un signal de capteur, des valeurs (207 - 212) en corrélation avec une mesure, et les moyens de retenue (5) sont déclenchés en fonction de la mesure influencée par au moins un signal délivré par les capteurs d'habitacle (4).

2. Procédé selon la revendication 1,
**caractérisé en ce que**
le temps et la manière du déclenchement des moyens de retenue sont définis en fonction de la mesure.

3. Procédé selon la revendication 1 ou 2,
**caractérisé en ce que**
les algorithmes (201 - 206, 300 - 304) utilisent une mesure commune.

4. Procédé selon la revendication 3,
**caractérisé en ce que**
la mesure commune est la gravité de collision.

5. Procédé selon la revendication 4,
**caractérisé en ce que**
la gravité de la collision est déterminée par la chute de la vitesse ou le déport en avant.

6. Procédé selon une des revendications précédentes,
**caractérisé en ce qu'**
au moins un signal de capteur est produit par un capteur de pré-collision (2) et/ ou par un capteur de collisions (1).

7. Procédé selon une des revendications précédentes,
**caractérisé en ce que**
les différents algorithmes sont au moins deux des algorithmes suivants : algorithme de pré-collision (302), algorithme frontal, algorithme d'impact latéral (303), algorithme frontal supérieur (301) ou algorithme de tonneau (304).

8. Procédé selon la revendication 4,
**caractérisé en ce que**
la gravité de la collision est utilisée en mode scalaire ou en mode vectoriel ou matériel (307).

9. Procédé selon la revendication 4 ou 8,
**caractérisé en ce que**
la gravité de la collision est rapportée à l'algorithme ou au type de collision ou au moyen de retenue.

10. Dispositif pour la mise en oeuvre du procédé selon une des revendications 1 à 9,
**caractérisé en ce que**
le dispositif comprend un appareil de commande (3) équipé d'un processeur, un capteur de pré-collision (2), un capteur de collisions (1), un capteur d'habitacle (4), une commande de circuit d'allumage des moyens de retenue (5) et ces moyens (5) eux-mêmes.
